# EUROPEAN PATENT APPLICATION

(11) **EP 4 535 571 A1**
(43) Date of publication of application: **09.04.2025**
(21) Application number: 23306673.7
(22) Date of filing: 02.10.2023
(51) Int. Cl.: H01R 4/32, H01R 4/06

(54) **GROUNDING CONTACT AND METHOD FOR ASSEMBLING A GROUND CABLE AND A COMPONENT**

(71) Applicant: Dubuis et Cie, 41000 Villebarrou (FR)
(72) Inventor: GENDRE, Guillaume, 41000 Villebarou (FR)
(74) Representative: Regimbeau

(57) **Abstract**

Method for assembling a ground cable and a component with an electrically conductive component surface and grounding contact to perform such method, the grounding contact comprising:
- a dowel (12) defining a dowel axial bore (16) including an internal thread, and
- a bush (14, 14') defining a bush axial bore (26) adapted to receive the dowel, such that the dowel can be received at least in part inside the bush and can deform at least a portion of the bush (14, 14'),
wherein the bush (14, 14') comprises a cylindrical body (28) longitudinally extending between a first end and a second end and a flange (33) extending radially outwardly from the second end of the cylindrical body, the flange (33) comprises gripping elements (34) adapted to cooperate with a tool,
wherein the dowel (12) has a substantially frustoconical shape with an external surface having an anti-rotational profile, the dowel being adapted to plastically deform the cylindrical body of the bush (14, 14'),
in that the bush axial bore (26) comprises a first segment with a first bore geometry and a second segment with a second bore geometry, the first geometry comprising an anti-rotational profile (40) adapted to cooperate with the anti-rotational profile (22) of the dowel to prevent the rotation of the bush with regard to the dowel.

## Description

The present invention relates to a grounding contact for creating an electrical contact between a ground cable and a component or component having an electrically conductive surface.

For structures made of metal, especially steel, the structure needs to be grounded, in order that the structure, when subjected to electrical current or lightning strikes, protects people or property from the lethal health hazard or deadly current. For this purpose, the structures are provided with a grounding point at which one grounding contact is attached. The grounding contact is connected to a ground wire or ground cable, which is grounded, so that due to the electrically conductive connection between the ground cable, the grounding contact and the structure, the structure is grounded.

Grounding contact are used in several fields of technology, and notably in the aircraft construction, in the railway construction, in the automobile industry, but also in the building construction. For instance in France, electrical installations in the building industry need to comply with the NFC15-100 standard with grounding requirements. In the building construction, grounding contacts comprising a screw and a nut are often used. Grounding contacts comprising a screw and a nut are well known. For the assembly of the screw and the nut, access is required to the two sides of the component during assembly. This is sometime challenging and requires a time-consuming installation. Besides the robustness of the connection is not always guaranteed.

One-sided assembly solutions adapted to avoid the requirement to have access to the two sides of the component exist.

Document US2020028283A1 discloses ground contacts which have a first contact surface for application on the component surface, a second contact surface for fastening a ground cable and a passage for a fastening element, by means of which the ground contacts are attached to the component. The ground contact of US2020028283A1 comprises an electrically conductive contact plate and a fastening element. The fastening section is configured as a bolt section with a self-forming thread for driving into a borehole of a component or component. Such device allows a one-sided grounding connection. However, the screw connection between the bolt and the component requires assembly and installation time. Besides, the user needs to be particularly careful that the screw connection is correctly done.

US2015244134A1, in the name of the applicant, discloses a grounding contact for fixing an electrical connection terminal to a support defining a through hole, the grounding contact comprising a ring including a receiving portion partially defining an axial recess and insertable in the through hole of the support, and a dowel including an insert portion axially insertable into the recess of the ring and a locking portion axially spaced from the insert portion, the dowel partially defining an axial bore including an internal thread, and in the locking portion the internal thread of the bore is a distorted locking thread.

EP3900115A1 discloses an electrical connection comprising a first electrically conductive component which has an opening, a bolt comprising a head and a thread section, and an electrically conductive plastically deformable ring having a sleeve section comprising a through-opening with a second longitudinal axis for receiving the bolt, and a bearing collar. The opening is provided with a passage to support high torques.

Such devices may be complicated to assemble and/or may require a high degree of precision and specific tools to make a robust connection. However, installers, particularly in the construction sector, do not always have the time or the right tools at their disposal to carry out these assemblies correctly.

One object of the invention is to ensure a secured and robust installation with a short installation time and which can be easily done by a user or installers.

This object is achieved in the context of the present invention by means of a grounding contact according to claim 1 and a method for assembling a ground cable and a component with an electrically conductive component surface according to claim 13. More particularly, the grounding contact comprises a dowel defining a dowel axial bore including an internal thread, and a bush defining a bush axial bore adapted to receive the dowel, such that the dowel can be received at least in part inside the bush and can deform at least a portion of the bush. The bush comprises a cylindrical body longitudinally extending between a first end and a second end and a flange extending radially outwardly from the second end of the cylindrical body, the flange comprises gripping elements adapted to cooperate with a tool. The dowel has a substantially frustoconical shape with an external surface having an anti-rotational profile, the dowel being adapted to plastically deform the cylindrical body of the bush. The bush axial bore comprises a first segment with a first bore geometry and a second segment with a second bore geometry, the first geometry comprising an anti-rotational profile adapted to cooperate with the anti-rotational profile of the dowel to prevent the rotation of the bush with regard to the dowel. The anti-rotational profile of the bush thus complements the anti-rotational profile of the dowel. The grounding contact can well support and resist high torque and transmit high currents. Such grounding contact is also easily used to connect, disconnect and reconnect a ground cable, thus limiting waste. The grounding contact is thus reusable. Such grounding contact can be installed from one side only and does not require a two-sided access for installation. The internal thread and the gripping elements make it easy for a user to install the grounding contact with classical tools. The anti-rotation features are used to create axial displacement of the dowel within the bush. When using a threaded rod cooperating with the internal thread, screwing into the dowel combined with locking the bush in rotation (using the gripping element) by the installer using a tool (for instance, a flat wrench can be used) will generate a crimping operation due to the radial expansion of the bush caused by the displacement of the dowel within the bush. The grounding contact, once installed and therefore after the bush being radially deformed due to a torque, resists to deformation and torque (during unscrewing for instance), due to its particular geometry. More particularly, once installed on a component or component, the dowel remains in position to ensure that the clamping force is not loosened, even when unscrewing.

In an embodiment the conical external surface of the dowel comprises a plurality of lobes which form the anti-rotational profile. The geometry with the lobes is easy to manufacture and provide a robust anti-rotational profile. For instance, six lobes can be provided such that the dowel has a frustoconical hexagonal shape.

In an embodiment, the dowel has a frustoconical shape that tapers from a first surface to a second surface, the first surface having a greater cross-section than the second surface, wherein the first surface has a cross-section greater than the first segment of the bush axial bore, and wherein the dowel is movable within the bush axial bore between a pre-mounted position in which the second surface of the dowel in arranged within the first segment, the first surface is arranged outside and a mounted position in which the first segment is plastically deformed by the dowel, such that the external radial dimension of the body is increased. Such grounding contact can be easily installed with a plastic deformation allowing a solid and secured assembly, but without a special crimping tool. Standard screw bolt tools, a standard screw with a screw drive, ... can be used.

In an embodiment, an abutment surface is provided between the first segment and the second segment. The abutment surface prevents a user to apply a torque too high to the grounding contact, notably when the hole in the component (or component) has a dimension above the given tolerances. The abutment surface avoids unnecessary further motion of the dowel with regard to the bush when being mounted.

In an embodiment, an internal circular groove is arranged between the first and the second segment. The internal circular groove may be used during the manufacturing process (for instance machining process) of the grounding contact (more particularly of the bush). In an embodiment, the grounding contact is not provided with an internal circular groove. More particularly, for a grounding contact manufactured by a cold-forming process, the internal circular groove, may not be present (due to cold-forming manufacturing constraints).

In an embodiment, the diameter of the axial bush bore in the second segment is smaller than the diameter of the axial bush bore in the first segment. This allows a better centering of a threaded rod of a tool. Besides, a diameter restriction forms an abutment surface.

In an embodiment, the flange is an elongated flange along the longitudinal axis and comprises a base and a U-shaped member projecting from the base, the U-shaped member having diametrically opposite legs, the legs defining a longitudinally extending cavity adapted to receive a locking element. The grounding contact forms or comprises a cable clamp adapted to clamp a ground cable.

In an embodiment, the locking element is a screw cooperating with an internal threaded portion of the cavity. The screw allows an easy clamping of the ground cable.

In an embodiment, the flange comprises a first axial through hole, the body comprises a second axial through hole, connected to the first axial through hole, the first axial through hole and the second axial through hole forming the bush axial bore, and wherein the diameter of the first axial through hole is smaller than the diameter of the second axial through hole. This allows a better centering of a threaded rod of a mounting tool.

In an embodiment, the external diameter of the body and the dimension of the second axial through hole along the longitudinal axis are constant in a pre-mounted position. The body has thus a cylindrical shape.

In an embodiment, the flange comprises on its lateral surface flats. The flats allow an easy retaining during the assembly with a wrench. In an alternative embodiment, other shapes may be provided to allow the assembly. More generally any screw drive shape (allowing torque to be applied to the flange) may be used such as slots, cross, cruciform drives, square drives, internal hex drives, external hex drives, internal or external torx drives, polygonal external drives, ...

In an embodiment, the flange comprises a lower surface facing the body, and wherein the lower surface is provided with a circular flange groove. The circular groove is advantageous because it allows a better or easier machining, manufacturing, platting and expansion. With the groove the flange can sit flush.

The present invention is also directed to a method for assembling a ground cable and a component with an electrically conductive component surface, the component defining a through hole, comprising the steps of:
- providing a ground cable, a component with an electrically conductive component surface and defining a through hole, and a grounding contact according to any of the preceding claims, the grounding contact being in a pre-mounted state, such that dowel and bush are assembled together,
- inserting the dowel and a portion of the bush into the through hole until the flange contacts the component,
- providing a first tool adapted to cooperate with the gripping element,
- retaining the grounding contact in contact with the component with the first tool,
- providing a second tool with a threaded rod adapted to cooperate with the internal thread of the dowel,
- operating the second tool in rotation such that the threaded rod engages the internal thread and pull the dowel axially toward the second tool and inside the first segment, thus radially expanding the body by the action of the dowel moving deeper into the bush axial bore;
- forming a crimping connection between the grounding contact and the component by the radial expansion of the body;
- disengaging the second tool from the dowel by unscrewing the second tool from the internal thread;
- assembling the ground cable to the grounding contact in the mounted position.

The assembly does not require a special crimping tool due to the threaded portion and the anti-rotational profile. A torque is applied which allows the translation of the dowel with regard to the bush and the plastic deformation of the body such as to be fixed within the hole provided in the component.

In an embodiment the first tool is a manual wrench, and the second tool is a power tool. The second tool can for instance be a screwdriver acting on a screw, or the second tool can be a power tool comprising a specific additional tooling to be attached to the front end of the second tool. The specific additional tooling may for instance provides a retaining function to retain the grounding contact in position on the component or component before and during the crimping step and/or provide a crimping in position and/or integrate a torque limiter and/or hols the grounding contact in position.

In an embodiment, the steps of forming a crimping connection between the bush and the component and assembling the ground cable to the grounding contact are realized in a single operation. For instance, the ground cable is pre-assembled to the grounding contact in the pre-mounted state and a screw is screwed by a second tool like a screw driver within the internal thread of the dowel, the screw actuating the radial expansion of the body and the assembly of the ground cable to the grounding contact.

Other features and advantages will become apparent from the following description, which is given purely by way of illustrative and non-limiting example and is to be read in relation to the accompanying drawings, in which:
Fig. 1 is a perspective view of a grounding contact comprising a dowel and a bush according to a first embodiment of the invention;
Fig. 2A, Fig. 2B and Fig. 2C are respectively perspective view, cross-sectional view and bottom view of the dowel of Fig. 1;
Fig. 3A, Fig. 3B and Fig. 3C are respectively perspective view, cross-sectional view and bottom view of the bush of Fig. 1;
Fig. 4A is a cross-sectional view of the grounding contact of Fig. 1 in a pre-mounted state; Fig. 4B is a cross-sectional view of the grounding contact of Fig. 1 in a mounted state;
Fig. 5 is a perspective view of a grounding contact according to a second embodiment of the invention comprising the dowel of Fig.2A and a bush according to a second embodiment;
Fig. 6A, Fig. 6B and Fig. 6C are respectively perspective view, cross-sectional view and bottom view of the bush of Fig. 5;
Fig. 7 shows a cross-sectional view of a bush according to a third embodiment;
Fig. 8 shows a cross-sectional view of a bush according to a fourth embodiment.

The grounding contact 10 according to the invention is designed for making electrical contact between a ground cable and a component with an electrically conductive component surface.

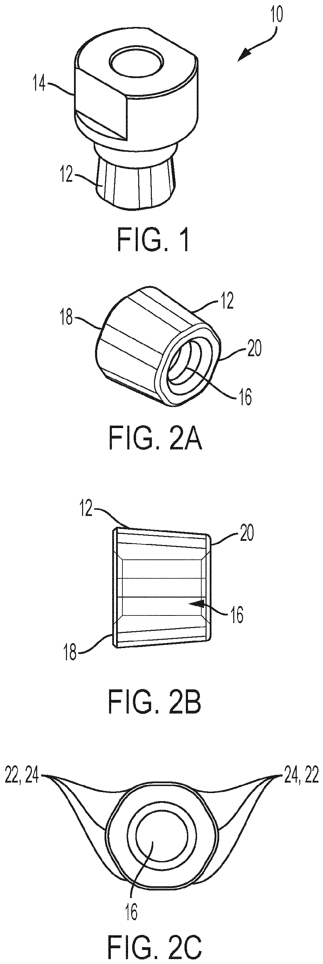

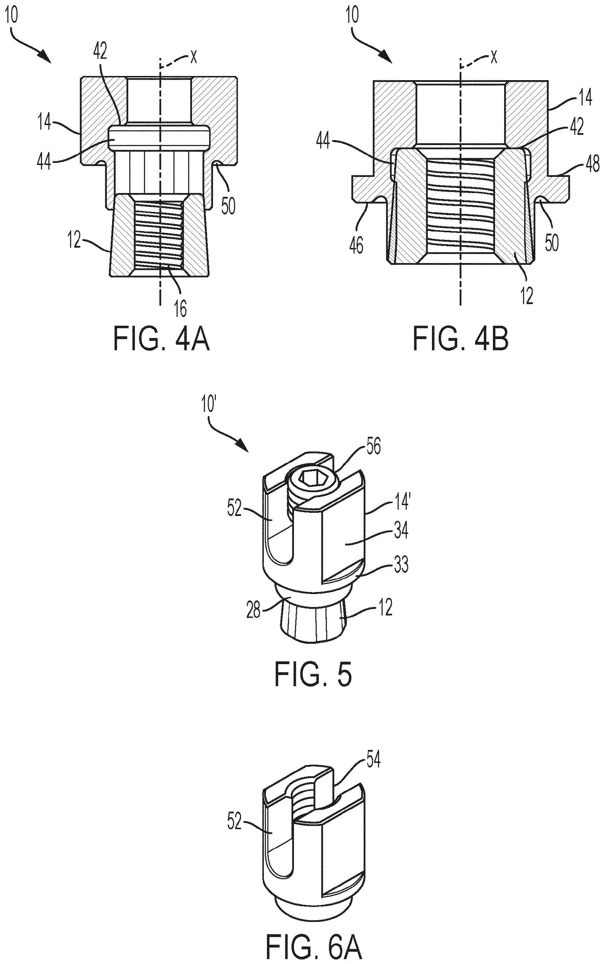

The grounding contact 10, as visible in Fig. 1 and Fig. 5, comprises a dowel 12 adapted to cooperate with a bush 14, such that the dowel moves with regard to the bush from a pre-mounted state to a mounted state. Fig. 1 shows a first embodiment of the grounding contact 10. In the first embodiment, the grounding contact forms a grounding insert for receiving a lug of a ground cable. Fig. 5 shows a second embodiment of the grounding contact 10. In the second embodiment, the grounding contact forms a grounding insert for clamping a ground cable.

In both embodiments, the dowel 12 defines a dowel axial bore 16. The dowel axial bore is for instance circular and has a constant diameter. The axial bore 16 is a through bore and at least a portion of the bore includes an internal thread. The dowel 12 is better seen in Fig. 2A, Fig. 2B and Fig. 2C. As depicted in Fig. 2B, the internal thread extends substantially along the entire length of the dowel. A first and a second chamfer has arranged at both ends of the internal thread. However, in another embodiment, only a portion of the dowel axial bore is threaded.

The dowel has a frustoconical general shape that tapers from a first surface 18 to a second surface 20, the first surface 18 having a greater cross-section than the second surface 20. The external surface of the dowel comprises an anti-rotational profile 22. The anti-rotational profile 22 comprises a plurality of lobes 24, as visible in Fig. 2C. More particularly, the anti-rotational profile 22 comprises six lobes 24 such that the dowel has a frustoconical shape. However, in an alternative embodiment, the anti-rotational profile may comprise one, two, three, four, five or more than six lobes

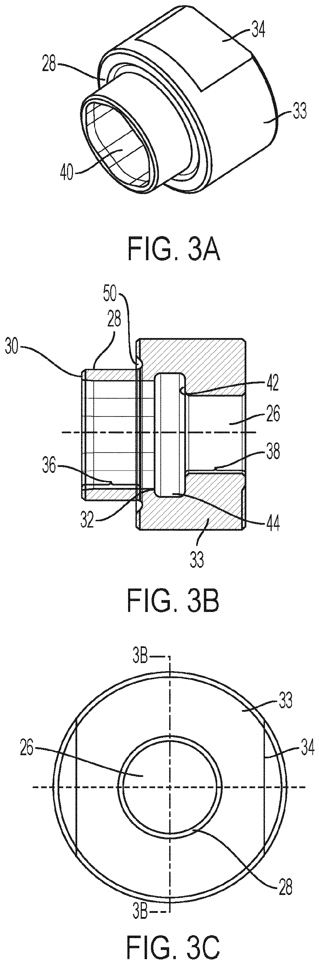

In the first embodiment, depicted in Fig. 1, the bush 14 (better seen in Fig. 3A, Fig. 3B and Fig. 3C) defines a bush axial bore 26. The bush axial bore 26 is adapted to receive the dowel 12. The bush 14 comprises a cylindrical body 28 longitudinally extending between a first end 30 and a second end 32. A flange 33 extends radially outwardly from the second end 32 of the body 28. The bush axial bore 26 is a through hole extending through both the body and the flange. The flange comprises gripping elements 34 adapted to cooperate with a tool. More particularly, as better seen in Fig. 1 or Fig. 3A or Fig. 3C, the flange comprises flats 34. Thus, a wrench (or any other similar tool) can cooperate with the flange 33. The bush axial bore 26 comprises a first segment 36 with a first geometry. The bush axial bore 26 comprises a second segment 38 with a second geometry. For instance, the first geometry is different than the second geometry. The first bore geometry comprises an anti-rotational profile 40 adapted to cooperate with the anti-rotational profile of the dowel. More particularly, the first segment corresponds to the bush axial bore portion extending within the body, wherein the second segment substantially corresponds to the bush axial bore portion extending within the flange. The anti-rotational profile of the bush corresponds to the anti-rotational profile of the dowel and comprises a plurality of recesses adapted to receive the plurality of lobes. For instance, six recesses are provided forming a substantially hexagonal shape. The anti-rotational profile of the bush complements the anti-rotational profile of the dowel. The first segment does not have the same frustoconical shape than the dowel. The first segment has a substantial constant cross-section along a longitudinal axis X. The dimension of the first segment is smaller than the biggest cross-section of the dowel (The outer dimension of the first surface 18 is greater than the maximal dimension of the first segment). The second segment comprises for instance a circular cross-section. The second segment has for instance a diameter which is substantially similar or greater than the diameter of the threaded portion of the dowel. An abutment portion 42 is arranged at the end of the first segment. The abutment portion is formed by an abutment surface. A diameter restriction between the first and the second segment 36, 38 may form the abutment surface.

An internal circular groove 44 may be arranged between the first and the second segment 36, 38, as depicted in Fig. 3B. The flange 33 comprises a lower surface 46 facing the body 28, and an upper surface 48 opposite the lower surface. The lower surface 46 is provided with a circular flange groove 50.

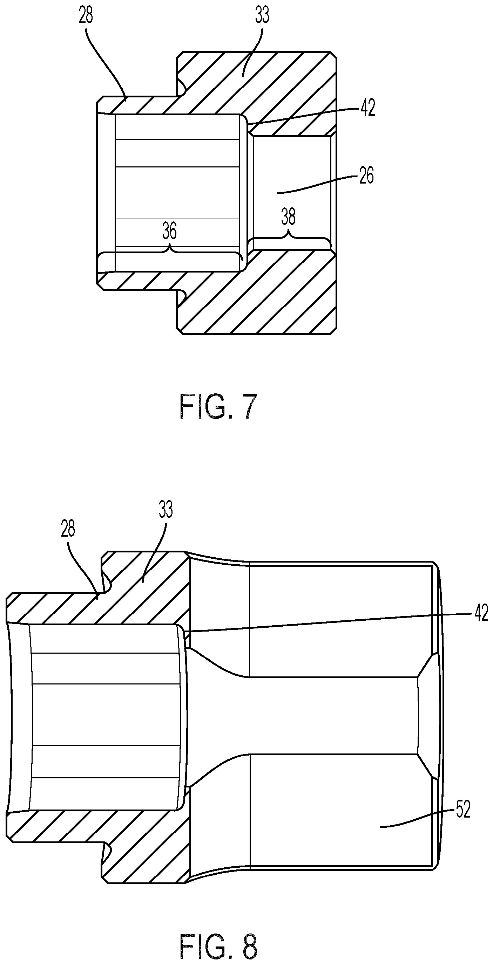

In another embodiment, depicted in Fig. 7, no circular groove is provided between the first and second segments 36, 38. The bush of Fig. 7 is notably manufactured by a cold forming process, wherein the bush of Fig. 3B may be manufactured by a machining process.

In a mounted state of the grounding contact according to the first embodiment, a cable lug can be attached and fixed to the flange in a known manner. Alternatively, the cable lug can be attached to the grounding contact in its pre-mounted state and then fixed to the grounding contact during the setting of the grounding contact on the component (as described below). In a known manner, a screw may be used to connect the cable lug to the grounding contact.

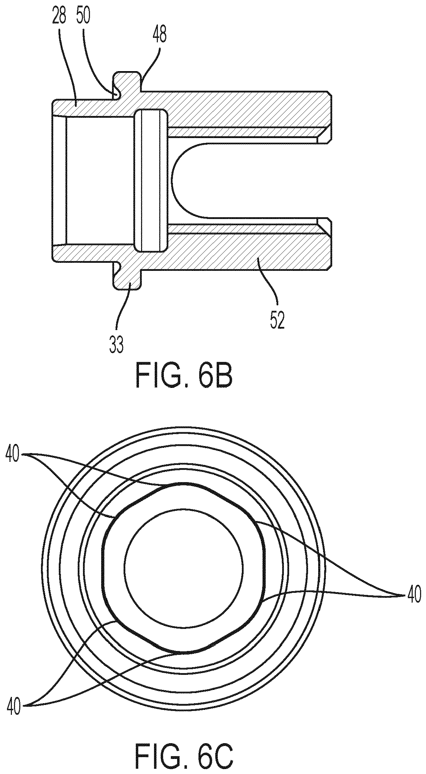

Fig. 5 shows a second embodiment of the grounding contact 10. In the second embodiment, the dowel 12 is substantially similar to the dowel of the first embodiment. The bush 14' is also similar, in some aspect, to the bush 14 described in relation to the first embodiment, with the flange, the body, the first segment and the second segment. As depicted in Fig. 6A, Fig. 6B and Fig. 6C, the flange of the bush 14' in the second embodiment is an elongated flange along the longitudinal axis and comprises a base and a U-shaped member 52 projecting from the base, the U-shaped member 52 having diametrically opposite legs, the legs defining a longitudinally extending cavity 54 adapted to receive a locking element 56. The locking element 56 is for instance a screw. The screw 56 cooperates with a threaded portion of the cavity. The screw is adapted to clamp a ground cable (or wire) to the flange of the grounding contact. The ground cable is with a stripped part. The stripped part of the ground cable is inserted into the cavity.

An internal circular groove 44 may be arranged between the first and the second segment 36, 38, as depicted in Fig. 6B.

In another embodiment, depicted in Fig. 8, no circular groove is provided between the first and second segments 36, 38. The bush of Fig. 7 is notably manufactured by a cold forming process, wherein the bush of Fig. 6B may be manufactured by a machining process.

The installation of the grounding contact 10, 10' is done as follows.

In a first step, the grounding contact is provided in a pre-mounted state (or pre-mounted position). In the pre-mounted state a limited portion of the dowel is in interference fit with a portion of the first segment. A chamfer may be provided at the free end of the body to facilitate the assembly in the pre-mounted state. The second surface of the dowel extends into the axial bush bore, as depicted in Fig. 4A. Thus, the dowel 12 and the bush 14, 14' are pre-assembled together and there are no loose connections between both parts.

A user can then insert the grounding contact and more particularly first the dowel (or the first surface of the dowel) into a hole of a component. The grounding contact 10, 10' is inserted into the hole of the component until the component contacts the lower surface 46 of the flange 33. The lower surface 46 of the flange 33 forms an abutment surface for the grounding contact 10, 10'.

A first tool is used to retain the grounding contact against the component. The first tool cooperates with the gripping elements 34. For instance, the first tool is a wrench which cooperates with the flats provided on the flange. When retaining the grounding contact against the component, a second tool is used to cooperate with the internal thread of the dowel. More particularly the second tool comprises a threaded rod which cooperates with the internal thread of the dowel. The threaded rod is rotated in order to move in translation the dowel within the first segment from the pre-mounted state to a mounted state. During the translation of the dowel within the first segment, the frustoconical shape of the dowel plastically deforms the body, performing thus a crimping connection between the grounding contact and the component. The dowel 12 applies a deformation force to the body during the translation. The material forming the dowel is harder than the material forming the bush and thus the deformation occurs. Fig. 4B. shows the grounding element in the mounted state. The dowel contacts the abutment portion 42 and the body has been permanently radially deformed, thus the grounding contact is locked into the hole of the component (not represented). The threaded rod can then be unscrewed, and the grounding contact can be used to attach a cable lug for instance. The threaded rod can also be a screw and the same screw is used to install the ground cable during the crimping. Depending on the second tool used and the type of the threaded rod, the torque to assemble the grounding contact can be limited or not. For instance, if the threaded rod is a M6 screw, the torque shall not exceed 10Nm. Therefore, a torque limiter may be provided on the second tool. If the tightening torque is too low (less than 6Nm for a diameter 11 or 12mm hole, for example), the crimping force might not be sufficient for the bush deformation to hold the grounding contact in place into the hole of the component.

For the second embodiment, before using the second tool, the locking element or screw 56 is removed from the cavity 54, such that the threaded rod can be inserted into the axial bush bore from the second segment and then cooperate with the internal thread. The second tool can be a conventional power tool or a manual tool. The second tool is for instance a wrench. The second tool can for instance be a screwdriver acting on a screw, or the second tool can be a power tool comprising a specific additional tooling to be attached to the front end of the second tool. The specific additional tooling may for instance provides a retaining function to retain the grounding contact in position on the component or component before and during the crimping step and/or provide a crimping in position and/or integrate a torque limiter and/or hols the grounding contact in position. In case of a specific additional tooling, said tooling may encompass both the first and the second tool.

The bush and the dowel may be made in steel. The steel used for the dowel is harder than the steel used for the bush. an unalloyed carbon structural steel for example. More particularly, the bush has a hardness of less than 100 HB (Brinell hardness). The dowel has a hardness greater than 250 HB. The material and treatment of the bush is such that it allows the radial deformation without breakage. The material of the bush is for instance an electrically conductive material adapted to be easily deformed, such as aluminum, copper or aluminum alloys or copper alloy for example.

Such grounding contact is easily used to connect, disconnect and reconnect a ground cable. More particularly such grounding contact allows a re-usable connection. The installation (more particularly the crimping operation) can be carried out with or without the use of a cable lug (the direct fixation of a wire without cable lug for instance is also possible). The grounding contact guaranteed the electrical connection, even if an old cable lug (or wire) is disassembled and a new one is re-assembled. The stacking of several cable lugs or wires is also possible. For a first installation, a torque of 10N.m can be used. For second and other installations, an installation of a wire or cable lug with a torque of 6N.m can be used.
grounding contact 10, 10'
dowel 12
bush 14, 14'
dowel axial bore 16
first surface 18
second surface 20
anti-rotational profile 22
lobes 24
bush axial bore 26
body 28
first end 30
second end 32
flange 33
gripping elements 34
first segment 36
second segment 38
anti-rotational profile 40
longitudinal axis X
abutment portion 42
internal circular groove 44
lower surface 46
upper surface 48
circular flange groove 50
U-shaped member 52
cavity 54
locking element 56

## Claims

1. Grounding contact (10, 10') for making electrical contact between a ground cable and a component with an electrically conductive component surface, the component defining a through hole in which the grounding contact can partly extend, the grounding contact comprising:
- a dowel (12) defining a dowel axial bore (16) including an internal thread, and
- a bush (14, 14') defining a bush axial bore (26) adapted to receive the dowel, such that the dowel can be received at least in part inside the bush and can deform at least a portion of the bush (14, 14'),
wherein the bush (14, 14') comprises a cylindrical body (28) longitudinally extending between a first end and a second end and a flange (33) extending radially outwardly from the second end of the cylindrical body, the flange (33) comprises gripping elements (34) adapted to cooperate with a tool,
**characterized in that** the dowel (12) has a substantially frustoconical shape with an external surface having an anti-rotational profile, the dowel being adapted to plastically deform the cylindrical body of the bush (14, 14'),
**in that** the bush axial bore (26) comprises a first segment with a first bore geometry and a second segment with a second bore geometry, the first geometry comprising an anti-rotational profile (40) adapted to cooperate with the anti-rotational profile (22) of the dowel to prevent the rotation of the bush with regard to the dowel.

2. Grounding contact (10, 10') according to claim 1, wherein the frustoconical external surface of the dowel (12) comprises a plurality of lobes (24) which form the anti-rotational profile (22).

3. Grounding contact (10, 10') according to claim 1 or 2, wherein the dowel (12) has a frustoconical shape that tapers from a first surface to a second surface, the first surface having a greater cross-section than the second surface,
wherein the first surface has a cross-section greater than the first segment of the bush axial bore,
and wherein the dowel (12) is movable within the bush axial bore (26) between a pre-mounted position in which the second surface of the dowel in arranged within the first segment, the first surface is arranged outside and a mounted position in which the first segment is plastically deformed by the dowel, such that the external radial dimension of the body is increased.

4. Grounding contact (10, 10') according to any of the preceding claim, wherein an abutment surface (42) is provided between the first segment and the second segment.

5. Grounding contact (10, 10') according to any of the preceding claims, wherein an internal circular groove (44) is arranged between the first and the second segment.

6. Grounding contact (10, 10') according to any of the preceding claims, wherein the diameter of the axial bush bore (26) in the second segment is smaller than the diameter of the axial bush bore in the first segment.

7. Grounding contact (10') according to any of the preceding claims, wherein the flange (33) is an elongated flange along the longitudinal axis and comprises a base and a U-shaped member projecting from the base, the U-shaped member (52) having diametrically opposite legs, the legs defining a longitudinally extending cavity adapted to receive a locking element (56).

8. Grounding contact (10') according to claim 7, wherein the locking element is a screw cooperating with an internal threaded portion of the cavity.

9. Grounding contact (10, 10') according to any of claims 1 to 8, wherein the flange (33) comprises a first axial through hole, the body comprises a second axial through hole, connected to the first axial through hole, the first axial through hole and the second axial through hole forming the bush axial bore, and wherein the diameter of the first axial through hole is smaller than the diameter of the second axial through hole.

10. Grounding contact according to claim 9, wherein the external diameter of the body (28) and the dimension of the second axial through hole along the longitudinal axis are constant in a pre-mounted position.

11. Grounding contact (10, 10') according to any of the preceding claims, wherein the flange (33) comprises flats on its lateral surface.

12. Grounding contact (10, 10') according to any of the preceding claims, wherein the flange (33) comprises a lower surface facing the body, and wherein the lower surface is provided with a circular flange groove.

13. Method for assembling a ground cable and a component with an electrically conductive component surface, the component defining a through hole, comprising the steps of:
- providing a ground cable, a component with an electrically conductive component surface and defining a through hole, and a grounding contact (10, 10') according to any of the preceding claims, the grounding contact being in a pre-mounted state, such that dowel and bush are assembled together,
- inserting the dowel (12) and a portion of the bush into the through hole until the flange contacts the component,
- providing a first tool adapted to cooperate with the gripping element,
- retaining the grounding contact (10, 10') in contact with the component with the first tool,
- providing a second tool with a threaded rod adapted to cooperate with the internal thread of the dowel (12),
- operating the second tool in rotation such that the threaded rod engages the internal thread and pull the dowel axially toward the second tool and inside the first segment, thus radially expanding the body by the action of the dowel moving deeper into the bush axial bore;
- forming a crimping connection between the bush and the component by the radial expansion of the body;
- disengaging the second tool from the dowel by unscrewing the second tool from the internal thread;
- assembling the ground cable to the grounding contact in the mounted position.

14. Method according to claim 13, wherein the first tool is a manual wrench, and the second tool is a power tool.

15. Method according to claim 13 or 14, wherein the steps of forming a crimping connection between the grounding contact and the component and assembling the ground cable to the grounding contact are realized in a single operation.
